(19) **Europäisches Patentamt European Patent Office Office européen des brevets**

(11) **EP 1 750 386 B1**

(12) **EUROPEAN PATENT SPECIFICATION**

(45) Date of publication and mention
of the grant of the patent:
**04.10.2017 Bulletin 2017/40**

(51) Int Cl.:
***H04L 1/06*** (2006.01)

(21) Application number: **06116803.5**

(22) Date of filing: **07.07.2006**

(54) **Method and device for multimedia multicast transmission over a wireless network**

Verfahren und Vorrichtung zur Multimedia-Mehrfachübertragung über ein Drahtloses Netzwerk

Procédé et dispositif de multidiffusion multimedia sur un réseau sans fil

(84) Designated Contracting States:
**DE FR GB**

(30) Priority: **03.08.2005 EP 05300647**

(43) Date of publication of application:
**07.02.2007 Bulletin 2007/06**

(73) Proprietor: **Thomson Licensing SA
92130 Issy-les-Moulineaux (FR)**

(72) Inventors:
- **Zou, Li
  Hai Dian District
  100085, Beijing (CN)**
- **Wang, Charles
  Rm 03-09,8F, Bld.A
  Hai Dian District
  100085, Beijing (CN)**

(74) Representative: **Huchet, Anne et al
TECHNICOLOR
1-5, rue Jeanne d'Arc
92130 Issy-les-Moulineaux (FR)**

(56) References cited:
**US-A1- 2004 161 050**

- **LARSSON E G ET AL: "NONUNIFORM UNITARY SPACE-TIME CODES FOR LAYERED SOURCE CODING" IEEE TRANSACTIONS ON WIRELESS COMMUNICATIONS, IEEE SERVICE CENTER, PISCATAWAY, NJ, US, vol. 3, no. 3, May 2004 (2004-05), pages 958-965, XP001227355 ISSN: 1536-1276**
- **LARSSON, E.G.: "Unitary Nonuniform Space-Time Constellations for the Broadcast Channel" IEEE COMMUNICATIONS LETTERS, vol. 7, no. 1, January 2003 (2003-01), pages 21-23, XP011066478**
- **BAUCH G A: "Higher order differential matrix modulation" INFORMATION THEORY, 2004. ISIT 2004. PROCEEDINGS. INTERNATIONAL SYMPOSIUM ON CHICAGO, ILLINOIS, USA JUNE 27-JULY 2, 2004, PISCATAWAY, NJ, USA,IEEE, 27 June 2004 (2004-06-27), pages 189-189, XP010749900 ISBN: 0-7803-8280-3**

EP 1 750 386 B1

**Description**

FIELD OF THE INVENTION

The present invention relates generally to wireless transmission of video, data, and speech at high rates, and particularly to a method and device for multimedia multicast transmission in wireless networks.

BACKGROUND OF THE INVENTION

How to provide reliable mobile wireless transmission of video, data, and speech at high rates to many users has been intensively studied in recent years.

One known system and method for improving video transmission over a wireless network is disclosed in PCT application number PCT/EP01/01878 (publication number WO 01/65848, referred hereafter as D1). As disclosed, D1 is tailored to solve video transmission problems in RF band and the system proposed is limited to single antenna system.

Michael B. Pursley developed one approach using nonuniform M-ary Phase-Shift-Key (M-PSK) constellation in multicast transmission of multimedia message to receivers of different capabilities (Michael B. Pursley, John M. Shea, "Nonuniform Phase-Shift-Key Modulation for Multimedia Multicast Transmission in Mobile Wireless Networks," IEEE Journal on Selected Area in Communications, VOL. 17, No.5, May 1999). The system is based on one transmitter antenna and one receiver antenna. So its spectral efficiency and performance are limited.

Erik G. Larsson proposed a new differential space-time codes tailored to point-to-multipoint, or broadcast, communications using layered source coding (Erick G. Larrson, "Nonuniform Unitary Space-time Codes for Layered Source Coding," IEEE Trans. On Wireless Communications, VOL. 3, No.3, May 2004). The transmission of an additional message incurs performance degradation and the selection of signal constellation is limited.

One known way to get high rates on a wireless wideband channel is to use multiple transmitter and/or receiver antennas. Multiple Input Multiple Output (MIMO) technology significantly enhances system performance. Using proper space-time coding, it is possible to use the degrees of freedom of the MIMO channel both to increase the throughput and to counteract fading. Space-time coding and modulation strategies have recently been adopted in 3G cellular standards (e.g., CDMA2000 and WCDMA) and have also been proposed for wireless local loop (Lucent's BLAST project) and wide-area packet data access (AT&T's Advanced Cellular Internet Service). However, multiple antenna deployment requires multiple RF chains.

Another fact should be noted that distinct receivers have different capabilities of decoding a message, which suggests that the transmitted signal should consist of several components which are of different importance for the reconstruction of the message. Then came the concept of layered source coding and multilevel-modulation. Layered source coding is now a mature technique employed in many multimedia standards. For instance, the image coding standard JPEG-2000 and the video coding standard MEPG-4 what is sometimes referred to as "fine granularity scalability," which enables a gradual tradeoff between the error-free data throughput and the quality of the reconstructed image or video sequence. Such progressive source coding methods are already in use in many Internet applications where data rate can be traded for quality, and they are expected to play an instrumental role for the next generation of wireless standards to provide ubiquitous access both to the Internet, and to diverse sources of streaming video and audio. It is envisioned that in some existing applications, the basic message may be a voice message or a control message that must be delivered to several radios.

US 2004/161050 A1 introduces a method of broadcasting multi-layered information in a multi-antenna broadcasting system, the method can include identifying at least a first and second layer of information to be transmitted. The first layer of information can be encoded for transmission using a first unitary code matrix and the second layer of information can be encoded for transmission using a second unitary code matrix. The first and second layers of the multi-layered information can be transmitted with the multi-antenna broadcasting system. In the aforementioned document LARSSON E G ET AL: "NONUNIFORM UNITARY SPACE-TIME CODES FOR LAYERED SOURCE CODING", which introduces a space-time codes tailored to point-to-multipoint, or broadcast, communications using layered source coding, the transmitting method in a wireless communication system comprises encoding a basic message using Unitary Space-time coding and encoding and encoding an additional message using space-time coding; differentially encoding the combination of the encoded basic message and the encoded additional message; post-processing the result and transmitting it using at least one transmitter antenna.

However, there is no priority between the basic message and the additional message. Consequently, the constellation design can't make the basic message a larger chance to be decoded correctly when transmitting the basic message and the additional message.

There remains a need for exploiting the additional capacity of some of the links to deliver data simultaneously to the more capable receivers with higher complexity. Namely, the more-capable radios in a store-and-forward network could be used to advance a data packet toward its destination while they are also handling voice messages, or a voice packet can be forwarded to a more-capable radio at the same time that a network control packet is being sent.

Therefore, there is a need in the art for improved system and method for use not only in RF band but more advantageous in base band, also a further need for improved system and method that can adopt both coherent receiver and non-coherent receiver.

In these situations, it could be understood that fading conditions change so rapidly that channel estimation is difficult or require too many training symbols. Therefore, it is desirable to avoid channel estimation in order to reduce the cost and complexity of the handset.

It is further desirable to develop new wireless communication methods that achieve a higher spectral efficiency (data rate per unit bandwidth) and deliver image efficiently for a given power expenditure.

SUMMARY OF THE INVENTION

In one aspect of the present invention, a transmitting method for multimedia multicast in a wireless communication system, comprising:

step a, encoding a basic message using Unitary Space-time coding scheme (510);
step b, encoding an additional message using a differentially encoded space-time coding scheme;
step c, multiplying the results of the step a and the step b in order to obtain a combined message (550);
step d, post processing the result of the step c in order to make the signal ready for transmitting (560); and
step e, transmitting the result of the step d using at least one transmitter antenna (570).

In an embodiment of the present invention step b further comprises:

step b1, encoding an additional message using space-time coding scheme (520);
step b2, delaying the result of the step b1 by T symbol periods (530); and
step b3, combining the result of the step b1 with the result of the step b2 (540).

In an embodiment of the present invention, step c satisfies the subsequent equation:

$$\mathbf{S}(k) = \sqrt{T}\,\mathbf{B}_p(k)\mathbf{D}_q(k), \qquad k = 1, 2, \dots$$

wherein,

T is the number of signal periods being delayed, $\mathbf{B}p$ is the result of the step a, $\mathbf{D}q$ is the result of the step b, and S is the result of the step c.

In another aspect of the present invention, a receiving method for multimedia multicast in a wireless communication system is suggested. The receiving method comprises:

step m, receiving a signal (610);
step n, pre-processing the received signal in order to make it ready for decoding (620);

characterized in that it further comprises:

step o, decoding the basic message using noncoherent or coherent decoding scheme (640); and
step p, decoding the additional message using a differential decoding scheme as a function of the results of the step n and the step o..

In an embodiment of the invention, step p further comprises

step p1, delaying the result of the step n by T symbol periods (630);
step p2, delaying the result of the step o by T symbol periods (650); and
step p3, decoding the additional message using the differential decoding scheme based on the results of the step n, the step o, the step p1 and the step p2 (660).

In yet another embodiment of the present invention, step o satisfies the subsequent equation:

$$\hat{\mathbf{B}}_p(k) = \arg \max_{B_l \in \Omega_B} tr\left\{\mathbf{Y}^+(k)\left(\mathbf{B}_p\right)_l \left(\mathbf{B}_p\right)_l^+ \mathbf{Y}(k)\right\}$$

while the step p satisfies the following equation,

$$\hat{\mathbf{D}}_q(k) = \arg \min_{\mathbf{A}_{ql} \in \Omega_A} \left\| \hat{\mathbf{B}}_p^+(k)\mathbf{Y}(k) - \left(\mathbf{A}_q\right)_l \hat{\mathbf{B}}_p^+(k-1)\mathbf{Y}(k-1) \right\|$$

wherein,
Y is the result of the step n, $\hat{\mathbf{B}}_p$ is the result of the step o, Bp belongs to a basic message set, $\hat{\mathbf{D}}_q$ is the result of the step p and Aq belongs to an additional message set.

According to another aspect of the present invention, a transmitting device (100) for multimedia multicast in a wireless communication system is provided. The transmitting device comprises:

> a basic message encoder (120) using Unitary Space-time coding scheme;
> a set of additional message encoding means using multiple-antenna differential coding scheme;
> an operational device (150) for combining any input messages by multiplication and addition;
> a post processor (170) for processing the combined signal of multiplying the outputs from the basic message encoder (120) and the set of additional message encoding means by using said operational device (150) in order to make the combined signal ready for transmitting; and
> at least one transmitter antenna (180).

According to the present invention, the operational device satisfies the subsequent equation:

$$\mathbf{S}(k) = \sqrt{T}\mathbf{B}_p(k)\mathbf{D}_q(k), \qquad k = 1,2,....$$

wherein,
T is the number of signal periods being delayed, B$p$ is the output of the basic message encoder, D$q$ is the output of the set of additional message encoding means, and S is the output of combining the outputs from the basic message encoder (120) and the set of the additional message encoding means by using the operational device (150).

According to yet another aspect of the present invention, a receiving device (200) for multimedia multicast in a wireless communication system is proposed. The receiving device comprises:

> at least one receiver antenna (210) for receiving a signal;
> a pre-processor (220) for processing the received signal in order to make it ready for decoding;
> a basic message decoder (230) using noncoherent or coherent decoding scheme;
> a set of additional message decoding means using differential decoding scheme based on the outputs from the pre-processor (220) and the basic message decoder (230).

According the present invention, the basic message decoder satisfies the subsequent equation:

$$\hat{\mathbf{B}}_p(k) = \arg \max_{B_l \in \Omega_B} tr\left\{\mathbf{Y}^+(k)\left(\mathbf{B}_p\right)_l \left(\mathbf{B}_p\right)_l^+ \mathbf{Y}(k)\right\}$$

while said set of additional message decoding means satisfies the following equation,

$$\hat{\mathbf{D}}_q(k) = \arg \min_{\mathbf{A}_{ql} \in \Omega_A} \left\| \hat{\mathbf{B}}_p^+(k)\mathbf{Y}(k) - \left(\mathbf{A}_q\right)_l \hat{\mathbf{B}}_p^+(k-1)\mathbf{Y}(k-1) \right\|$$

where
Y is output of the pre-processor, $\hat{\mathbf{B}}_p$ is the output of the basic message decoder, Bp belongs to a basic message set, $\hat{\mathbf{D}}_q$ is output of the set of additional message decoding means and Aq belongs to an additional message set.

BRIEF DESCRIPTION OF THE DRAWINGS

Fig. 1 is a block diagram showing the schematic framework of the transmitting device according to the present invention;

Fig. 2 is a block diagram showing the schematic structure of the receiving device according to the present invention;

Fig. 3 is a schematic diagram showing the performance under Rayleigh flat-fading channel for M=1 transmitter antenna;

Fig. 4 is a schematic diagram showing the performance under Rayleigh flat-fading channel for M=2 transmitter antennas;

Fig. 5 is a flow chart showing a transmitting method for multimedia multicast transmission according to the present invention; and

Fig. 6 is a flow chart showing a receiving method for multimedia multicast transmission according to the present invention.

DETAILED DESCRIPTION OF THE PREFERRED EMBODIMENTS

The technical features of the present invention will be described further with reference to the embodiments. The embodiments are only preferable examples without limiting to the present invention. It will be well understood by the following detail description in conjunction with the accompanying drawings.

According to one embodiment of the present invention, a new signalling scheme is proposed, which is to be applied to the multimedia multicast in the mobile wireless network. This scheme can be used in the Multiple Input Multiple Output (referred as MIMO hereafter) system as well as Single Input Single Output (referred as SISO hereafter) system.

**1. Multi-rate transmission**

Consider a communication link comprising M transmitter antennas and N receiver antennas that operates in a Rayleigh flat-fading environment. Each receiver antennas respond to each transmitter antenna through a statically independent fading coefficient that is constant for 2T symbol periods. The fading coefficients change continuously according to a model such as Jakes (W.C.Jakes, Microwave Mobile Communications, Piscataway, NJ: IEEE Press, 1993). The received signals are corrupted by additive noise that is statistically independent among the N receivers and the T symbol periods. The system is capable of sending basic information bits and additional information bits.

First, $p$ base layer information bits are mapped into a unitary space-time (UST) signal $\mathbf{B}p$ which is a matrix signal.

Second, $q$ enhancement layer information bits are mapped in a matrix signal $\mathbf{A}q$. The differential transmission scheme sends the matrices $\mathbf{D}q$ as following:

$$\mathbf{D}_q(k) = \mathbf{A}_q(k)\mathbf{D}_q(k-1)$$

$$\mathbf{D}_q^{+}(0)\mathbf{D}_q(0) = \mathbf{I}_M$$

Third, the differential signal is multiplied by the unitary space-time modulation signal.

$$\mathbf{S}(k) = \sqrt{T}\mathbf{B}_p(k)\mathbf{D}_q(k), \qquad k = 1,2,....$$

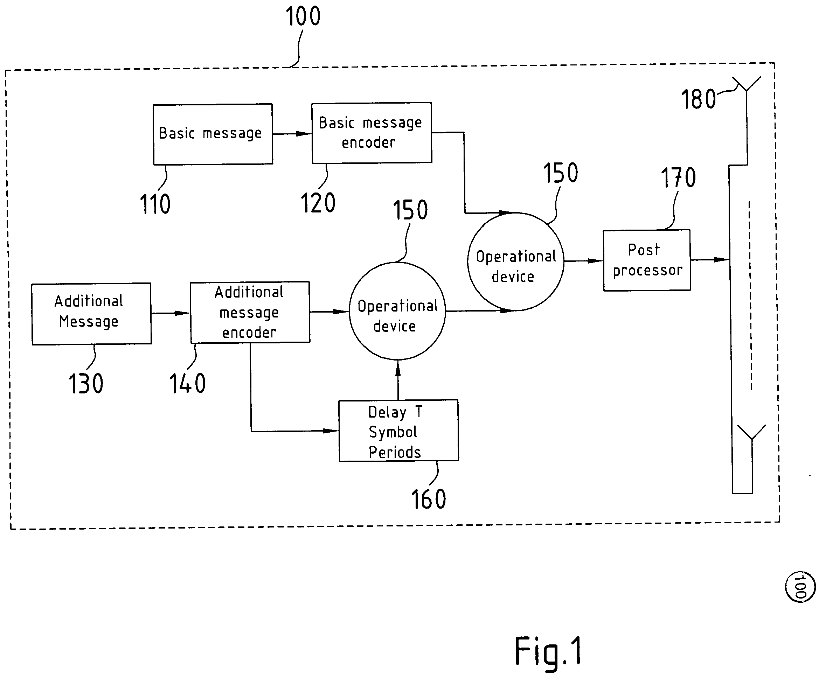

Finally, the matrix signal S (T x M) is transmitted during T-symbol interval by M transmitter antennas. Please refer to Fig 1, **110** is the basic message source, **120** is the basic message encoder which mapping every p bit basic message bit information into one $\mathbf{B}p$ matrix, **130** is the additional message source, **140** is the additional message encoder which mapping every q bit additional message bit information into one $\mathbf{A}q$ matrix, **150** is an operational device, which performs matrix multiplication operation, **160** is a T-symbol-period delayer, the matrix $\mathbf{A}q$ is multiplied with the former matrix **D**$q$(k-1) and get current required matrix Dq, then every item in matrix signal Dq is processed in post-processor **170** and transmitted by antennas **180**. It could be understood by the skilled in the art that the framework is flexible and can accommodate all rates and any number of antennas.

**2. Low-power and low-complexity design in the multimedia multicast transmission**

At the transmitter, the process of encoding can be done by indexing a look-up table, which can simplify the encoder design. In general, we can construct structured signal constellation such as diagonal constellations disclosed in the following references:

- B.M.Hochwald and T.L.Marzetta, "Unitary space-time modulation for multiple-antenna communication in Rayleigh flat fading," IEEE Trans. Inform Theory. Vol 46, Mar 2000 : 543~564
- B.M.Hochwald and W.Sweldens, "Differential unitary space-time modulation," IEEE Trans. Communication, Vol48, Dec, 2000 : 2041~2052
- Brian L.Hughes, "Differential Space-Time Modulation," IEEE Trans. Information Theory, Vol.46, No.7 Nov.2000: 2567~2578
- A.Shokrollahi, B. Hassibi, B.M. Hochwald and W.Sweldens, "Representation Theory for High-Rate Multiple-Antenna Code Design," IEEE Trans on Inform Theory, Vol.47, No.6, Sept. 2001 :2335~2367
- B.M.Hochwald, T.L.Marzetta, T.J.Richardson, W.Sweldens and Rudiger, "Systematic Design of Unitary Space-time Constellations," IEEE Trans. Inform Theory, Vol 46, Sept.2000 :1962~1973

Then only one antenna transmits at any given time. In the implementation we can use only one power amplifier or M amplifiers. If only one power amplifier is used, it can be switched on among the antennas. But this amplifier must be turned on for M-times to transmit a matrix signal. It could be easily understood that hardware cost is greatly saved in this way. The other method is using an array of M amplifiers simultaneously driving the other antennas. Consequently, this amplifier needs to have a larger linear operating range than an amplifier array would. Amplifiers with a large linear range are often expensive to design and build. It may therefore occasionally be desirable to have all M antennas transmitting simultaneously at a lower power level.

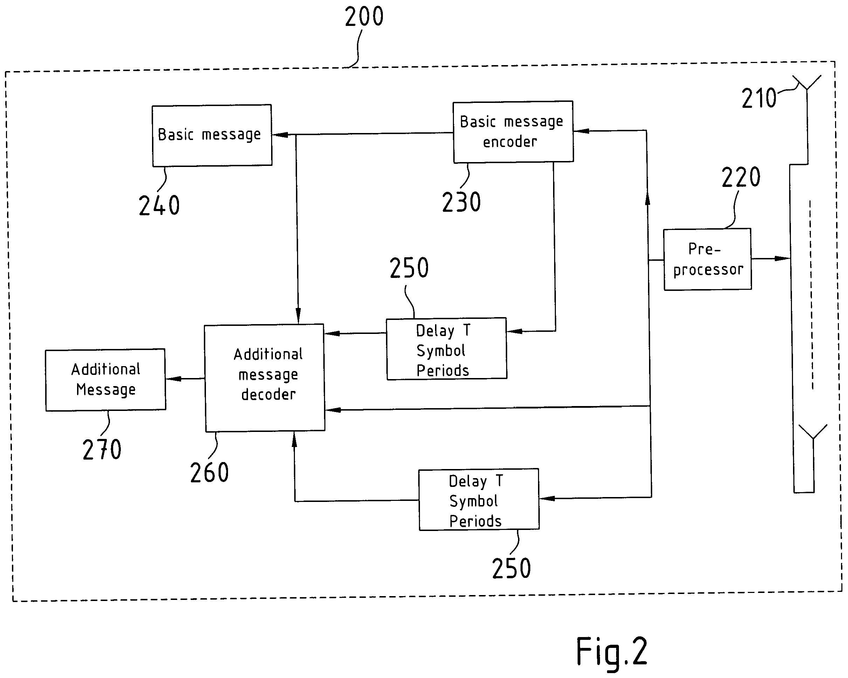

Then we may adopt Maximum Likehood (referred as ML hereafter) receiver when channel coefficients matrix **H** is unknown and, for comparison, when **H** is known to the receiver (**H** is never known to the transmitter). It is customary to call the former receiver noncoherent and the latter receiver coherent. Here we concentrate on noncoherent receiver as shown in Fig 2. The signal is received by receiver antennas **210**. The received signal Y(k) is processed in preprocessor **220**. And then it is delivered to the basic message decoder **230**. The delayer **250** delays the signal T symbol periods to get signal Y(k-1). The basic message decoder **230** decoded the received signal and gets basic message $\hat{B}_q(k)$ **240**. The processed message from the pre-processor **220** also is delivered to another delayer **250**. The delayer **250** delays $\hat{B}_q(k)$ T symbol periods and gets the delayed information $\hat{B}_q(k\text{-}1)$. The decoded basic message $\hat{B}_q(k)$, the delayed decoded basic message $\hat{B}_q(k\text{-}1)$, the received information Y(k) and the delayed received information Y(k-1) are inputted into the additional message decoder **260**. Then the additional message decoder **260** outputs the decoded additional message $\hat{A}_q$ **270**.

For the non-coherent receiver, we can get as following:

First, we decode the received signal to estimate basic message according to ML criterion.

$$\hat{\mathbf{B}}_p(k) = \arg \max_{B_l \in \Omega_B} tr\left\{ \mathbf{Y}^+(k)\left(\mathbf{B}_p\right)_l \left(\mathbf{B}_p\right)_l^+ \mathbf{Y}(k) \right\}$$

Second, ML demodulator for the additional message is:

$$\hat{\mathbf{D}}_q(k) = \arg \min_{\mathbf{A}_{ql} \in \Omega_A} \left\| \hat{\mathbf{B}}_p^+(k)\mathbf{Y}(k) - \left(\mathbf{A}_q\right)_l \hat{\mathbf{B}}_p^+(k-1)\mathbf{Y}(k-1) \right\|$$

Supposed that the estimated basic message $\hat{\mathbf{B}}_p$ is right and we then can estimate the additional message $\hat{\mathbf{D}}_q$. Since the basic message may be control message or more important message than additional message, this supposition is reasonable. The skilled in the art will apprehend that conventional decoding algorithm could be applied in the coherent receiver design.

### 3. High performance in the mobile wireless network

This scheme can be used in the MIMO system as well as SISO system. MIMO technology significantly enhances system performance. Using proper space-time coding, it is possible to use the degrees of freedom of the MIMO channel both to increase the throughput and to counteract fading.

This proposed scheme combined USTM and differential space-time modulation effectively. USTM achieve high performance at mobile wireless environment even without training sequences or knowledge of the propagation matrix. For example, within a single coherence interval of duration T=16, for M=7 transmitter antennas and N=4 receiver antennas, and an 18 dB expected SNR, a total of 80 bits can theoretically be transmitted with a block probability of error less than $10^{-9}$. The differential space-time modulation is derived from unitary space-time modulation and achieve good performance too.

The error probabilities of proposed system can be controlled by the selection of the different constellations. All do not need any training or knowledge of the propagation matrix.

In order to evaluate the performance of proposed system, we perform simulations. The results prove that the new signaling scheme can work well in both SISO and MIMO systems. The base layer message can be demodulated independently. The transmission of the enhancement layer message does not degrade the performance of base layer message performance. If the proposed signaling scheme is used in MIMO system, the transmit diversity and coding gain will improve the system performance. Suppose the channel model is that the maximum non-direction Doppler frequency in cycles per sample period is $f_d$=0.01 cycles/sample and the transmitted signal has an average expected power equal to one.

Specifically at M=1 and 2 transmitter antennas and N=1 receiver antennas. Here we choose the following code where the rate for the base layer message is 1 bits/s/Hz and the rate for the additional message is 3/8 bits/s/Hz. So the total spectral efficiency is 11/8. The unitary space-time signal constellation is constructed as following:

If the number of transmitter antennas is M=1,

$$\mathbf{B}_8 = \mathbf{\Theta}_1^{I_1} \mathbf{\Theta}_2^{I_2} \mathbf{\Theta}_3^{I_3} \mathbf{\Theta}_4^{I_4} \left(\mathbf{B}_8\right)_0$$

$$\mathbf{\Theta}_i = diag(\exp(j2\pi u_1 / L_i), \cdots \exp(j2\pi u_t / L_i)), \qquad 0 \leq u_1, \cdots u_t \leq L_i - 1, i = 1, \cdots 4$$

$$\left(\mathbf{B}_8\right)_0 = \frac{1}{\sqrt{8}} \begin{bmatrix} 1 & 1 & 1 & 1 & 1 & 1 & 1 & 1 \end{bmatrix}^T$$

$$\left([u_1 \cdots u_t]\right)_1 = \begin{bmatrix} 1 & 0 & 0 & 0 & 1 & 0 & 3 & 1 \end{bmatrix}$$

$$\left([u_1 \cdots u_t]\right)_2 = \begin{bmatrix} 0 & 1 & 0 & 0 & 3 & 1 & 1 & 2 \end{bmatrix}$$

$$\left([u_1 \cdots u_t]\right)_3 = \begin{bmatrix} 0 & 0 & 1 & 0 & 2 & 0 & 2 & 3 \end{bmatrix}$$

$$\left([u_1 \cdots u_t]\right)_4 = \begin{bmatrix} 0 & 0 & 0 & 1 & 1 & 1 & 3 & 2 \end{bmatrix}$$

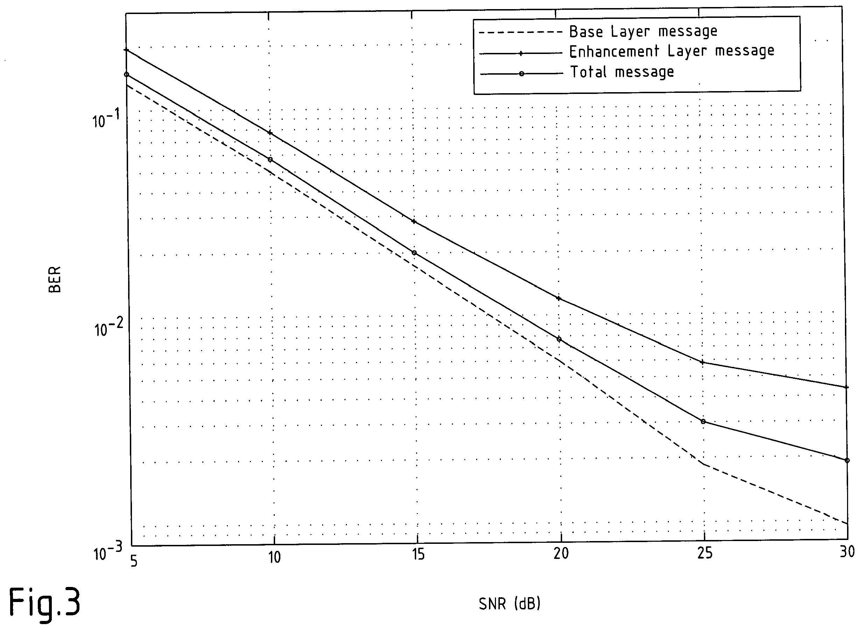

The enhancement layer message is coded as Octal-DPSK signal. The BERs of the base layer message, the enhancement layer message and total message under different SNR are calculated. The results are shown in Figure 3. In this simulation, the base layer message corresponds to the basic message while the enhancement layer message corresponds to the additional message. When SNR varies from 5dB to 30dB, the decoder of enhancement layer message can achieve lower BER than the decoder of base layer message. And with the increasing SNR, the decoder of enhancement layer message outperforms the decoder of base layer message more.

If the number of transmitter antennas is M=2,

$$\mathbf{B}_8 = \mathbf{\Theta}_1^{I_1} \left(\mathbf{B}_8\right)_0$$

$$\Theta_1 = diag(\exp(j2\pi 7/257), \cdots \exp(j2\pi 60/257)),$$

$$\exp(j2\pi 79/257), \exp(j2\pi 187/257),$$

$$\exp(j2\pi 125/257)), \exp(j2\pi 198/257), \exp(j2\pi 154/257)$$

The additional message is differential coded.

$$\mathbf{A}_8 = \left\{ \begin{bmatrix} 1 & 0 \\ 0 & 1 \end{bmatrix}, \begin{bmatrix} -1 & 0 \\ 0 & -1 \end{bmatrix}, \begin{bmatrix} j & 0 \\ 0 & -j \end{bmatrix}, \begin{bmatrix} -j & 0 \\ 0 & j \end{bmatrix}, \right.$$
$$\left. \begin{bmatrix} 0 & j \\ j & 0 \end{bmatrix}, \begin{bmatrix} 0 & -j \\ -j & 0 \end{bmatrix}, \begin{bmatrix} 0 & 1 \\ -1 & 0 \end{bmatrix}, \begin{bmatrix} 0 & -1 \\ 1 & 0 \end{bmatrix} \right\}$$

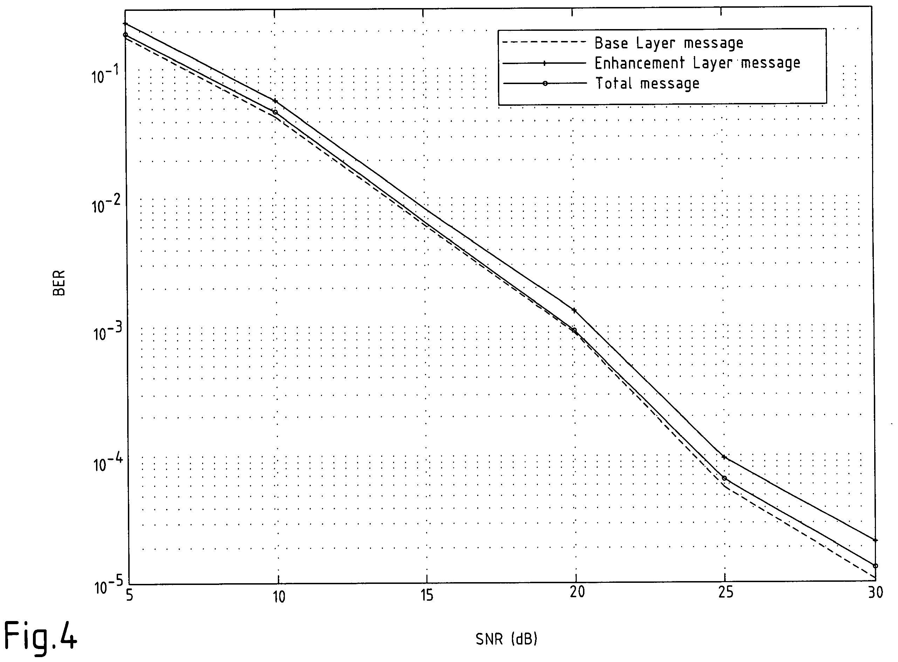

The Fig 4 shows the BERs of the base layer message, the enhancement layer message and total message under different SNR are calculated. In this simulation, the base layer message corresponds to the basic message while the enhancement layer message corresponds to the additional message. We may notice that the performance is improved compared to the Fig 3 due to the transmit diversity and coding gain.

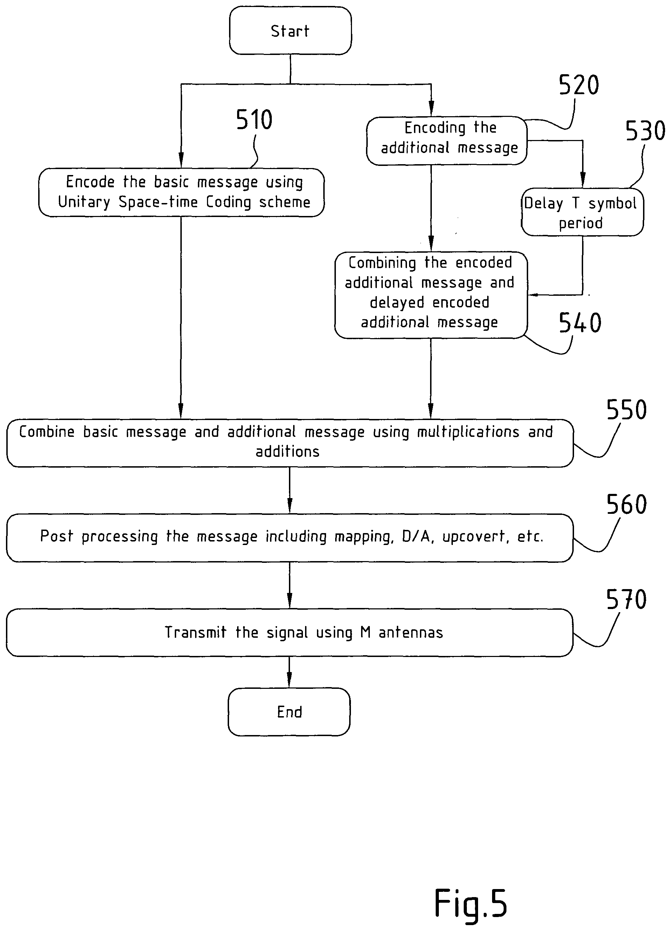

Fig. 5 depicts a transmitting method for multimedia multicast transmission according to one embodiment of the present invention. As shown in the figure, the basic message is encoded using Unitary Space-time Coding scheme in step **510**. The additional message is encoded using multi-antenna encoding scheme in step **520**. The output of encoded additional message is delayed T symbol periods in step **530**. In step **540**, the encoded additional message and the delayed encoded additional message are combined. The processing of Steps **520~540** forms multi-antenna differential coding scheme, which could be easily understood that it is independent from the processing of Step **510**. Namely, the processing of Steps **520~540** are not based on the result of Step **510** and vice versa. Moreover, Steps **520~540** could be conducted prior to Step **510,** simultaneously with Step **510,** or after Step **510**. The encoded basic message and the result in step **540** will be combined using multiplications and additions in Step **550**. Then, the signal is post processed in Step **560**. The post processing includes not limits to mapping, D/A, upconvert, etc. In Step **570,** the signal is transmitted using M antennas.

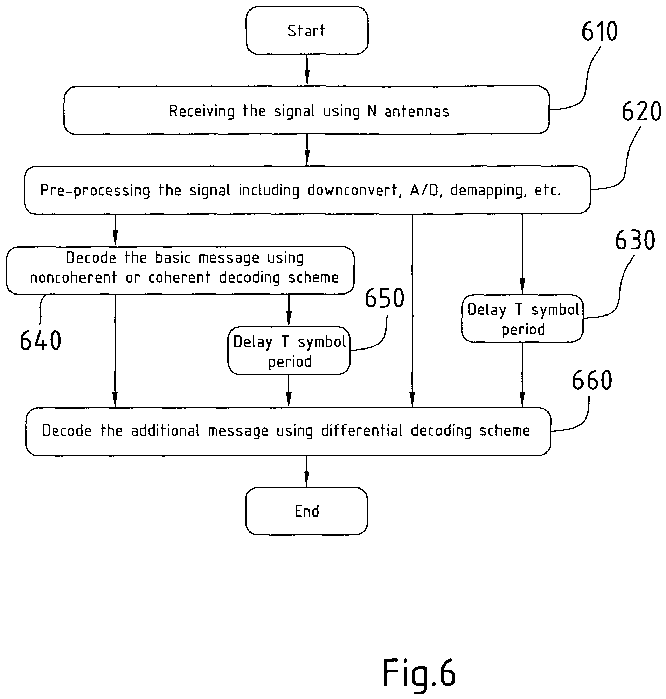

Fig. 6 depicts a receiving method in multimedia multicast transmission according to one embodiment of the present invention. As shown in the figure, the signal is received using N antennas at the receiver's side in step **610**. Then the signal is pre-processed in step **620**. The said pre-processing includes not limits to downconvert, A/D, demapping, etc. The processed signal is delayed T symbol periods in step **630**. Independent from the processing of step 630, the processed signal is decoded using noncoherent or coherent decoding in Step **640**. The decoded basic message is delayed T symbol periods in step **650**. Based on the pre-processed signal, the delayed pre-processed signal, the decoded basic message and the delayed decoded basic message, the additional message is decoded using differential decoding scheme in Step **660**. It is very clear that the size of the combined message is not increased after the basic message is combined with the additional message according to the above-mentioned method. Therefore, the capacity of transmission is used more efficiently when compared with those conventional methods.

With the above specified implementations, the proposed receiver that attempts to demodulate the base layer message does not need to know whether enhancement layer message are included. Such receivers may demodulate the body of the packet without even knowing whether enhancement layer message is included. The signal constellation is designed in a way that provides disparity among the probabilities of different types of symbol errors, and this disparity has been exploited to send additional data to more-capable receivers at the same time that a multicast message is being delivered to all of its intended recipients. The enlarged constellation according to one embodiment of this invention can devote some bits per symbol to convey the control or basic message and some bits per symbol to convey the additional message, then the quality of the transmission is improved by delivering data information along with the control message to the same receiver.

As known, 3G and beyond technology is required to operate on very high moving speed. In such case, the accurate channel estimation will be difficult and complex. A further advantage is that the new signaling scheme enables the receiver to demodulate the signal without any channel knowledge at the transmitter or at the receiver for multimedia transmission.

A still further advantage is that the enhancement layer message according to one embodiment of this invention can carry information that is of less importance for reconstruction of the transmitted message than the base layer message is.

This invention can be applied in broadcasting transmission as well as multicast transmission, such as DVB-T, ATSC 8-VSB systems. It can also be used in multi-program operation or as a point-to-multipoint transmission.

Whilst there has been described in the forgoing description preferred embodiments and aspects of the present invention, it will be understood by those skilled in the art that many variations in details of design or construction may be made without departing from the present invention.

**Claims**

1. A transmitting method for multimedia multicast in a wireless communication system, comprising:

   step a, encoding a basic message using Unitary Space-time coding scheme (510);

   **characterized in that** it further comprises:

   step b, encoding an additional message using a differentially encoded space-time coding scheme;
   step c, multiplying the results of the step a and the step b in order to obtain a combined message (550) ;
   step d, post processing the result of the step c in order to make the signal ready for transmitting (560); and
   step e, transmitting the result of the step d using at least one transmitter antenna (570).

2. The method according to claim 1, **characterized in that** the step b further comprises:

   step b1, encoding an additional message using space-time coding scheme (520);
   step b2, delaying the result of the step b1 by T symbol periods (530); and
   step b3, combining the result of the step b1 with the result of the step b2 (540).

3. The method according to claim 1, **characterized in that** the step c satisfies the subsequent equation:

$$\mathbf{S}(k) = \sqrt{T}\mathbf{B}_p(k)\mathbf{D}_q(k), \qquad k = 1,2,....$$

   wherein,
   T is the number of signal periods being delayed, $\mathbf{B}p$ is the result of the step a, $\mathbf{D}q$ is the result of the step b, and S is the result of the step c.

4. A receiving method for multimedia multicast in a wireless communication system, comprising:

   step m, receiving a signal (610);
   step n, pre-processing the received signal in order to make it ready for decoding (620);

   **characterized in that** it further comprises:

   step o, decoding the basic message using noncoherent or coherent decoding scheme (640); and
   step p, decoding the additional message using a differential decoding scheme as a function of the results of the step n and the step o.

5. A receiving method according to claim 4, **characterized in that** the step p further comprises:

   step p1, delaying the result of the step n by T symbol periods (630);
   step p2, delaying the result of the step o by T symbol periods (650); and
   step p3, decoding the additional message using the differential decoding scheme based on the results of the step n, the step o, the step p1 and the step p2 (660).

6. The method according to claim 4, **characterized in that** the step o satisfies the subsequent equation:

$$\hat{\mathbf{B}}_p(k) = \arg \max_{B_l \in \Omega_B} tr\left\{\mathbf{Y}^+(k)(\mathbf{B}_p)_l(\mathbf{B}_p)_l^+ \mathbf{Y}(k)\right\}$$

while the step p satisfies the following equation,

$$\hat{\mathbf{D}}_q(k) = \arg \min_{\mathbf{A}_{q_l} \in \Omega_A} \left\| \hat{\mathbf{B}}_p^+(k)\mathbf{Y}(k) - (\mathbf{A}_q)_l \hat{\mathbf{B}}_p^+(k-1)\mathbf{Y}(k-1) \right\|$$

wherein,
Y is the result of the step n, $\hat{\mathbf{B}}_p$ is the result of the step o, Bp belongs to a basic message set, $\hat{\mathbf{D}}_q$ is the result of the step p and Aq belongs to an additional message set.

7. A transmitting device (100) for multimedia multicast in a wireless communication system, comprising:

a basic message encoder (120) using Unitary Space-time coding scheme;
**characterized in that** it further comprises:

a set of additional message encoding means using multiple-antenna differential coding scheme;
an operational device (150) for combining any input messages by multiplication and addition;
a post processor (170) for processing the combined signal of multiplying the outputs from the basic message encoder (120) and the set of additional message encoding means by using said operational device (150) in order to make the combined signal ready for transmitting; and
at least one transmitter antenna (180).

8. The transmitting device according to claim 7, **characterized in that** said operational device satisfies the subsequent equation:

$$\mathbf{S}(k) = \sqrt{T}\mathbf{B}_p(k)\mathbf{D}_q(k), \qquad k = 1,2,....$$

wherein,
T is the number of signal periods being delayed, $\mathbf{B}p$ is the output of the basic message encoder, $\mathbf{D}q$ is the output of the set of additional message encoding means, and S is the output of combining the outputs from the basic message encoder (120) and the set of the additional message encoding means by using the operational device (150).

9. A receiving device (200) for multimedia multicast in a wireless communication system, comprising:

at least one receiver antenna (210) for receiving a signal;
a pre-processor (220) for processing the received signal in order to make it ready for decoding;

**characterized in that** it comprises,

a basic message decoder (230) using noncoherent or coherent decoding scheme;
a set of additional message decoding means using differential decoding scheme based on the outputs from the pre-processor (220) and the basic message decoder (230).

10. The receiving device according to claim 9, **characterized in that** said basic message decoder satisfies the subsequent equation:

$$\hat{\mathbf{B}}_p(k) = \arg \max_{B_l \in \Omega_B} tr\left\{\mathbf{Y}^+(k)(\mathbf{B}_p)_l(\mathbf{B}_p)_l^+ \mathbf{Y}(k)\right\}$$

while said set of additional message decoding means satisfies the following equation,

$$\hat{\mathbf{D}}_q(k) = \arg \min_{\mathbf{A}_{ql} \in \Omega_A} \left\| \hat{\mathbf{B}}_p{}^+(k)\mathbf{Y}(k) - \left(\mathbf{A}_q\right)_l \hat{\mathbf{B}}_p{}^+(k-1)\mathbf{Y}(k-1) \right\|$$

where
Y is output of the pre-processor, $\hat{\mathbf{B}}_p$ is the output of the basic message decoder, Bp belongs to a basic message set, $\hat{\mathbf{D}}_q$ is output of the set of additional message decoding means and Aq belongs to an additional message set.

**Patentansprüche**

1. Sendeverfahren für Multimedia, das in einem drahtlosen Kommunikationssystem sammelgesendet wird, wobei das Verfahren umfasst:

Schritt a, Codieren einer Basisnachricht unter Verwendung eines einheitlichen Raum-Zeit-Codierungsschemas (510);
**dadurch gekennzeichnet, dass** es ferner umfasst:

Schritt b, Codieren einer zusätzlichen Nachricht unter Verwendung eines differentiell codierten Raum-Zeit-Codierungsschemas;
Schritt c, Multiplizieren der Ergebnisse des Schritts a und des Schritts b, um eine kombinierte Nachricht zu erhalten (550);
Schritt d, Nachverarbeiten des Ergebnisses des Schritts c, um das Signal für das Senden bereit zu machen (560); und
Schritt e, Senden des Ergebnisses des Schritts d unter Verwendung mindestens einer Senderantenne (570).

2. Verfahren nach Anspruch 1, **dadurch gekennzeichnet, dass** der Schritt b ferner umfasst:

Schritt b1, Codieren einer zusätzlichen Nachricht unter Verwendung eines Raum-Zeit-Codierungsschemas (520);
Schritt b2, Verzögern des Ergebnisses des Schritts b1 um T Symbolperioden (530); und
Schritt b3, Kombinieren des Ergebnisses des Schritts b1 mit dem Ergebnis des Schritts b2 (540).

3. Verfahren nach Anspruch 1, **dadurch gekennzeichnet, dass** der Schritt c der folgenden Gleichung genügt:

$$\mathbf{S}(k) = \sqrt{T}\mathbf{B}_p(k)\mathbf{D}_q(k), \quad k = 1, 2, \ldots,$$

wobei
T die Anzahl der Signalperioden ist, die verzögert werden, $\mathbf{B}_p$ das Ergebnis des Schritts a ist, $\mathbf{D}_q$ das Ergebnis des Schritts b ist und $\mathbf{S}$ das Ergebnis des Schritts c ist.

4. Empfangsverfahren für Multimedia, das in einem drahtlosen Kommunikationssystem sammelgesendet wird, wobei das Verfahren umfasst:

Schritt m, Empfangen eines Signals (610);
Schritt n, Vorverarbeiten des Empfangssignals, um es für die Decodierung bereit zu machen (620);
**dadurch gekennzeichnet, dass** es ferner umfasst:

Schritt o, Decodieren der Basisnachricht unter Verwendung eines nicht kohärenten oder eines kohärenten Decodierungsschemas (640); und
Schritt p, Decodieren der zusätzlichen Nachricht unter Verwendung eines differentiellen Decodierungsschemas in Abhängigkeit von den Ergebnissen des Schritts n und des Schritts o.

5. Empfangsverfahren nach Anspruch 4, **dadurch gekennzeichnet, dass** der Schritt p ferner umfasst:

Schritt p1, Verzögern des Ergebnisses des Schritts n um T Symbolperioden (630);
Schritt p2, Verzögern des Ergebnisses des Schritts o um T Symbolperioden (650); und

Schritt p3, Decodieren der zusätzlichen Nachricht unter Verwendung des differentiellen Decodierungsschemas auf der Grundlage der Ergebnisse des Schritts n, des Schritts o, des Schritts p1 und des Schritts p2 (660).

6. Verfahren nach Anspruch 4, **dadurch gekennzeichnet, dass** der Schritt o der folgenden Gleichung genügt:

$$\hat{\mathbf{B}}_p(k) = \arg\max_{B_1 \in \Omega_B} \text{tr}\left\{\mathbf{Y}^+(k)\left(\mathbf{B}_p\right)_1\left(\mathbf{B}_p\right)_1^+\mathbf{Y}(k)\right\},$$

während der Schritt p der folgenden Gleichung genügt:

$$\hat{\mathbf{D}}_q(k) = \arg\min_{A_{q1} \in \Omega_A} \left\|\hat{\mathbf{B}}_p^+(k)\mathbf{Y}(k) - \left(\mathbf{A}_q\right)_1\hat{\mathbf{B}}_p^+(k-1)\mathbf{Y}(k-1)\right\|,$$

wobei
$\mathbf{Y}$ das Ergebnis des Schritts n ist, $\hat{\mathbf{B}}_p$ das Ergebnis des Schritts o ist, $\mathbf{B}_p$ zu einem Basisnachrichtensatz gehört, $\hat{\mathbf{D}}_q$ das Ergebnis des Schritts p ist und $\mathbf{A}_q$ zu einem zusätzlichen Nachrichtensatz gehört.

7. Sendevorrichtung (100) für Multimedia, das in einem drahtlosen Kommunikationssystem sammelgesendet wird, wobei die Vorrichtung umfasst:

einen Basisnachrichtencodierer (120), der ein einheitliches Raum-Zeit-Codierungsschema verwendet:

**dadurch gekennzeichnet, dass** sie ferner umfasst:

einen Satz zusätzlicher Nachrichtencodierungsmittel, die ein differentielles Codierungsschema mit mehreren Antennen verwenden;
eine Betriebsvorrichtung (150) zum Kombinieren irgendwelcher Eingangsnachrichten durch Multiplikation und Addition;
einen Postprozessor (170) zum Verarbeiten des kombinierten Signals, um die Ausgaben von dem Basisnachrichtencodierer (120) und von dem Satz zusätzlicher Nachrichtencodierungsmittel unter Verwendung der Betriebsvorrichtung (150) zu multiplizieren, um zu veranlassen, dass das kombinierte Signal zum Senden bereit ist; und
mindestens eine Senderantenne (180).

8. Sendevorrichtung nach Anspruch 7, **dadurch gekennzeichnet, dass** die Betriebsvorrichtung der folgenden Gleichung genügt:

$$\mathbf{S}(k) = \sqrt{\text{T}}\mathbf{B}_p(k)\mathbf{D}_q(k), \quad k = 1, 2, \ldots,$$

wobei
T die Anzahl der Signalperioden ist, die verzögert werden, $\mathbf{B}_p$ die Ausgabe des Basisnachrichtencodierers ist, $\mathbf{D}_q$ die Ausgabe des Satzes zusätzlicher Nachrichtencodierungsmittel ist und $\mathbf{S}$ die Ausgabe des Kombinierens der Ausgaben von dem Basisnachrichtencodierer (120) und von dem Satz der zusätzlichen Nachrichtencodierungsmittel unter Verwendung der Betriebsvorrichtung (150) ist.

9. Empfangsvorrichtung (200) für Multimedia, das in einem drahtlosen Kommunikationssystem sammelgesendet wird, wobei die Vorrichtung umfasst:

mindestens eine Empfängerantenne (210) zum Empfangen eines Signals;
einen Präprozessor (220) zum Verarbeiten des Empfangssignals, um es zum Decodieren bereit zu machen;
**dadurch gekennzeichnet, dass** sie umfasst:

einen Basisnachrichtendecodierer (230), der ein nichtkohärentes oder ein kohärentes Decodierungsschema verwendet;
einen Satz zusätzlicher Nachrichtendecodierungsmittel, die ein differentielles Decodierungsschema verwenden, das auf den Ausgaben von dem Präprozessor (220) und von dem Basisnachrichtendecodierer (230) beruht.

10. Empfangsvorrichtung nach Anspruch 9, **dadurch gekennzeichnet, dass** der Basisnachrichtendecodierer der folgenden Gleichung genügt:

$$\hat{\mathbf{B}}_p(k) = \arg \max_{B_l \in \Omega_B} \mathrm{tr}\left\{\mathbf{Y}^+(k)\left(\mathbf{B}_p\right)_l \left(\mathbf{B}_p\right)_l^+ \mathbf{Y}(k)\right\},$$

während der Satz zusätzlicher Nachrichtendecodierungsmittel der folgenden Gleichung genügt:

$$\hat{\mathbf{D}}_q(k) = \arg \min_{A_{ql} \in \Omega_A} \left\| \hat{\mathbf{B}}_p^+(k)\mathbf{Y}(k) - \left(\mathbf{A}_q\right)_l \hat{\mathbf{B}}_p^+(k-1)\mathbf{Y}(k-1) \right\|,$$

wobei
$\mathbf{Y}$ die Ausgabe des Präprozessors ist, $\hat{\mathbf{B}}_p$ die Ausgabe des Basisnachrichtendecodierers ist, $\mathbf{B}_p$ zu einem Basisnachrichtensatz gehört, $\hat{\mathbf{D}}_q$ von dem Satz zusätzlicher Nachrichtendecodierungsmittel ausgegeben wird und $\mathbf{A}_q$ zu einem zusätzlichen Nachrichtensatz gehört.

## Revendications

1. Procédé de transmission pour une multidiffusion multimédia sur un système de communication sans fil, comprenant :

    l'étape a, codage d'un message de base à l'aide d'un schéma de codage espace-temps unitaire (510) ;

    **caractérisé en ce qu'**il comprend en outre :

    l'étape b, codage d'un message supplémentaire à l'aide d'un schéma de codage espace-temps à codage différentiel ;
    l'étape c, multiplication des résultats de l'étape a et de l'étape b pour obtenir un message combiné (550) ;
    l'étape d, post-traitement du résultat de l'étape c pour préparer le signal pour la transmission (560) ; et
    l'étape e, transmission du résultat de l'étape d à l'aide d'au moins une antenne émettrice (570).

2. Procédé selon la revendication 1, **caractérisé en ce que** l'étape b comprend en outre :

    l'étape b1, codage d'un message supplémentaire à l'aide d'un schéma de codage espace-temps (520) ;
    l'étape b2, retardement du résultat de l'étape b1 de T périodes de symbole (530) ; et
    l'étape b3, combinaison du résultat de l'étape b1 et du résultat de l'étape b2 (540).

3. Procédé selon la revendication 1, **caractérisé en ce que** l'étape c satisfait à l'équation suivante :

$$\mathbf{S}(k) = \sqrt{T}\mathbf{B}_p(k)\mathbf{D}_q(k), \qquad k = 1, 2, \ldots$$

où
T est le nombre de périodes de signal de retard, Bp est le résultat de l'étape a, Dq est le résultat de l'étape b et S est le résultat de l'étape c.

4. Procédé de réception pour une multidiffusion multimédia sur un système de communication sans fil, comprenant :

    l'étape m, réception d'un signal (610) ;
    l'étape n, pré-traitement du signal reçu pour le préparer pour le décodage (620) ;

    **caractérisé en ce qu'**il comprend en outre :

l'étape o, décodage du message de base à l'aide d'un schéma de décodage non cohérent ou cohérent (640) ; et l'étape p, décodage du message supplémentaire à l'aide d'un schéma de décodage différentiel en fonction des résultats de l'étape n et de l'étape o.

5. Procédé de réception selon la revendication 4, **caractérisé en ce que** l'étape p comprend en outre :

l'étape p1, retardement du résultat de l'étape n de T périodes de symbole (630) ;
l'étape p2, retardement du résultat de l'étape o de T périodes de symbole (650) ; et
l'étape p3, décodage du message supplémentaire à l'aide du schéma de décodage différentiel en fonction des résultats de l'étape n, de l'étape o, de l'étape p1 et de l'étape p2 (660).

6. Procédé selon la revendication 4, **caractérisé en ce que** l'étape o satisfait à l'équation suivante :

$$\hat{\mathbf{B}}_p(k) = \arg \max_{B_l \in \Omega_B} tr\left\{\mathbf{Y}^+(k)\left(\mathbf{B}_p\right)_l \left(\mathbf{B}_p\right)_l^+ \mathbf{Y}(k)\right\}$$

tandis que l'étape p satisfait à l'équation suivante :

$$\hat{\mathbf{D}}_q(k) = \arg \min_{\mathbf{A}_{ql} \in \Omega_A} \left\|\hat{\mathbf{B}}_p^+(k)\mathbf{Y}(k) - \left(\mathbf{A}_q\right)_l \hat{\mathbf{B}}_p^+(k-1)\mathbf{Y}(k-1)\right\|$$

où
Y est le résultat de l'étape n, $\hat{\mathbf{B}}_p$ est le résultat de l'étape o, Bp appartient à un ensemble de messages de base, $\hat{\mathbf{D}}_q$ est le résultat de l'étape p et Aq appartient à un ensemble de messages supplémentaires.

7. Dispositif de transmission (100) pour une multidiffusion multimédia sur un système de communication sans fil, comprenant :

un codeur de messages de base (120) utilisant un schéma de codage espace-temps unitaire ;
**caractérisé en ce qu'**il comprend en outre :

un moyen de codage d'un ensemble de messages supplémentaires utilisant un schéma de codage différentiel multi-antennes ;
un dispositif opérationnel (150) pour combiner des messages d'entrée par multiplication et addition ;
un post-processeur (170) pour traiter le signal combiné de la multiplication des sorties du codeur de messages de base (120) et du moyen de codage d'un ensemble de messages supplémentaires à l'aide dudit dispositif opérationnel (150) pour préparer le signal combiné pour la transmission ; et
au moins une antenne émettrice (180).

8. Dispositif de transmission selon la revendication 7, **caractérisé en ce que** ledit dispositif opérationnel satisfait à l'équation suivante :

$$\mathbf{S}(k) = \sqrt{T}\mathbf{B}_p(k)\mathbf{D}_q(k), \qquad k = 1, 2, \ldots$$

où
T est le nombre de périodes de signal de retard, Bp est la sortie du codeur de messages de base, Dq est la sortie du moyen de codage d'un ensemble de messages supplémentaires et S est la sortie de la combinaison des sorties du codeur de messages de base (120) et du moyen de codage d'un ensemble de messages supplémentaires à l'aide du dispositif opérationnel (150).

9. Dispositif de réception (200) pour une multidiffusion multimédia sur un système de communication sans fil, comprenant :

au moins une antenne réceptrice (210) pour recevoir un signal ;
un pré-processeur (220) pour traiter le signal reçu pour le préparer pour le décodage;

**caractérisé en ce qu'**il comprend :

un décodeur de messages de base (230) utilisant un schéma de décodage non cohérent ou cohérent ;
un moyen de décodage d'un ensemble de messages supplémentaires utilisant un schéma de décodage différentiel basé sur les sorties du pré-processeur (220) et du décodeur de messages de base (230).

**10.** Dispositif de réception selon la revendication 9, **caractérisé en ce que** ledit décodeur de messages de base satisfait à l'équation suivante :

$$\hat{\mathbf{B}}_p(k) = \arg \max_{B_l \in \Omega_B} tr\left\{ \mathbf{Y}^+(k)(\mathbf{B}_p)_l (\mathbf{B}_p)_l^+ \mathbf{Y}(k) \right\}$$

tandis que ledit moyen de décodage d'un ensemble de messages supplémentaires satisfait à l'équation suivante :

$$\hat{\mathbf{D}}_q(k) = \arg \min_{\mathbf{A}_{ql} \in \Omega_A} \left\| \hat{\mathbf{B}}_p^+(k)\mathbf{Y}(k) - (\mathbf{A}_q)_l \hat{\mathbf{B}}_p^+(k-1)\mathbf{Y}(k-1) \right\|$$

où
Y est la sortie du pré-processeur, $\hat{\mathbf{B}}_p$ est la sortie du décodeur de messages de base, Bp appartient à un ensemble de messages de base, $\hat{\mathbf{D}}_q$ est la sortie du moyen de décodage d'un ensemble de messages supplémentaires et Aq appartient à un ensemble de messages supplémentaires.

Fig.1

100

180

170 Post processor

150 Operational device

150 Operational device

160 Delay T Symbol Periods

120 Basic message encoder

110 Basic message

140 Additional message encoder

130 Additional Message

100

Fig.2

Fig.3

Fig.4

Fig.5

Start

Receiving the signal using N antennas — 610

620

Pre-processing the signal including downconvert, A/D, demapping, etc.

630

Decode the basic message using noncoherent or coherent decoding scheme

650

640

Delay T symbol period

Delay T symbol period

660

Decode the additional message using differential decoding scheme

End

Fig.6

**EP 1 750 386 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0101878 W
- WO 0165848 A

- US 2004161050 A1

**Non-patent literature cited in the description**

- **MICHAEL B. PURSLEY ; JOHN M. SHEA.** Nonuniform Phase-Shift-Key Modulation for Multimedia Multicast Transmission in Mobile Wireless Networks. *IEEE Journal on Selected Area in Communications,* May 1999, vol. 17 (5
- **ERICK G. LARRSON.** Nonuniform Unitary Space-time Codes for Layered Source Coding. *IEEE Trans. On Wireless Communications,* May 2004, vol. 3 (3
- **LARSSON E G et al.** *NONUNIFORM UNITARY SPACE-TIME CODES FOR LAYERED SOURCE CODING*
- **W.C.JAKES.** Microwave Mobile Communications. IEEE Press, 1993
- **B.M.HOCHWALD ; T.L.MARZETTA.** Unitary space-time modulation for multiple-antenna communication in Rayleigh flat fading. *IEEE Trans. Inform Theory.,* March 2000, vol. 46, 543-564

- **B.M.HOCHWALD ; W.SWELDENS.** Differential unitary space-time modulation. *IEEE Trans. Communication,* December 2000, vol. 48, 2041-2052
- **BRIAN L.HUGHES.** Differential Space-Time Modulation. *IEEE Trans. Information Theory,* November 2000, vol. 46 (7), 2567-2578
- **A.SHOKROLLAHI ; B. HASSIBI ; B.M. HOCHWALD ; W.SWELDENS.** Representation Theory for High-Rate Multiple-Antenna Code Design. *IEEE Trans on Inform Theory,* September 2001, vol. 47 (6), 2335-2367
- **B.M.HOCHWALD ; T.L.MARZETTA ; T.J.RICHARDSON ; W.SWELDENS ; RUDIGER.** Systematic Design of Unitary Space-time Constellations. *IEEE Trans. Inform Theory,* September 2000, vol. 46, 1962-1973